# EUROPÄISCHE PATENTSCHRIFT

(11) **EP 0 444 476 B1**
(45) Veröffentlichungstag und Bekanntmachung des Hinweises auf die Patenterteilung: **07.12.1994**
(21) Anmeldenummer: 91102061.8
(22) Anmeldetag: 14.02.1991
(51) Int. Cl.: C07F 7/22

(54) **Verfahren zur Herstellung von Tetraalkylzinn**
Process for the preparation of tetraalkyltin
Procédé pour la préparation de tétra-alkyl-étain

(30) Priorität: 26.02.1990 DE 4006043
(43) Veröffentlichungstag der Anmeldung: 04.09.1991
(73) Patentinhaber: Th. Goldschmidt AG, 45127 Essen (DE)
(72) Erfinder: Ruf, Erich, Dr., W-4300 Essen (DE)

(56) Entgegenhaltungen:
- EP-A- 0 001 870
- US-A- 3 103 526
- CHEMICAL ABSTRACTS, vol. 112, Columbus, Ohio, US; abstractno. 228530, SAWYER, A.K. ET AL: 'THE ACTION OF ACETIC ACID AND/OR ACETICANHYDRIDE ON EITHER TETRAPHENYLTIN OXIDE TO FORM TIN(Iv) ACETATE' Seite 799 ;
- CHEMICAL ABSTRACTS, vol. 78, Columbus, Ohio, US; abstractno. 43633M, MEL'NICHENKO, L.S. ET AL: 'REDISTRIBUTION OF RADICALS ANDFUNCTIONAL GROUPS IN ACYL (ACYLOXY) DERIVATIVES OF TIN' Seite 5

## Beschreibung

Die Erfindung betrifft ein Verfahren zur Herstellung von Tetraalkylzinn, dessen Alkylreste jeweils 1 bis 18 Kohlenstoffatome aufweisen. Dabei sind als Alkylreste solche mit 1 bis 8 Kohlenstoffatomen bevorzugt.

Es ist bekannt, Tetraalkylzinn durch Umsetzung von Zinn-IV-chlorid mit Trialkylaluminium herzustellen. Bei dieser Reaktion müssen zur Erzielung eines möglichst hohen Umsatzes relativ hohe Reaktionstemperaturen von > 80°C, insbesondere Temperaturen um 200°C, eingehalten werden.

Dabei ist besonders nachteilig, daß das bei der Umsetzung gebildete Aluminiumchlorid mit dem bei der Reaktion als Zwischenverbindung entstehenden Dialkylzinndichlorid und Trialkylzinnmonochlorid Komplexe bildet, die eine weitere Alkylierung dieser Verbindungen zum Tetraalkylzinn verhindern. Die Reaktion muß deshalb in Gegenwart von geeigneten Komplexbildnern für das Aluminiumtrichlorid durchgeführt werden. Als Komplexbildner werden Ether, Natriumchlorid oder tertiäre Amine verwendet.

In Gegenwart von Ether erfolgt die Alkylierung entsprechend dem Reaktionsschema:

4 R₃Al + 3 SnCl₄ + 4 R₂O → 3 R₄Sn + 4 AlCl₃ . R₂O

R = Alkylrest

Der Erfindung liegt die Aufgabe zugrunde, ein Verfahren zu finden, das die Herstellung von Tetraalkylzinn unter milderen Bedingungen mit guten Ausbeuten erlaubt und von gut zugänglichen Verbindungen ausgeht und bei dem die zusätzliche Verwendung eines Komplexbildners nicht erforderlich ist.

Dies gelingt durch das erfindungsgemäße Verfahren, welches durch folgende Verfahrensschritte gekennzeichnet ist:
a) Dispergieren von Zinntetraacetat in Tetrahydrofuran,
b) langsame Zugabe der zum vollständigen Umsatz benötigten, mindestens stöchiometrischen Menge Trialkylaluminium, dessen Alkylreste jeweils 1 bis 18 Kohlenstoffatome aufweisen,
   b1) unter Einstellung einer Temperatur im Reaktionsgemisch von < 80°C,
c) Erhitzen des Reaktionsgemisches auf Rückflußtemperatur des Tetrahydrofurans während eines Zeitraumes von etwa 1 bis 2 Stunden bis zum vollständigen Umsatz,
d) Abtrennen des gebildeten Aluminiumtriacetates und Abdestillieren des Tetrahydrofurans.

Der Verfahrensschritt a) - Dispergieren des Zinntetraacetats in Tetrahydrofuran - erfolgt unter Zuhilfenahme eines geeigneten Rührers.

Der Verfahrensschritt b) erfolgt unter Wärmeentwicklung, da die Reaktion exotherm verläuft. Die Zugabe des Trialkylaluminiums soll deshalb langsam erfolgen, da die Temperatur des Reaktionsgemisches 80°C nicht überschreiten soll. Bevorzugt soll die Reaktion bei einer Temperatur < 65°C ablaufen. Das Reaktionsgemisch muß deshalb in der Regel gekühlt werden, um die Reaktionswärme schnell abzuführen.

Die Menge des zuzugebenden Trialkylaluminiums erfolgt in den stöchiometrisch benötigten Mengen, d.h. für die Umsetzung von 1 Mol Zinntetraacetat werden etwa 1,3 bis 1,4 Mol Trialkylaluminium benötigt. Vorzugsweise gibt man in Stufe b) bis zu etwa 10 % mehr als die stöchiometrisch erforderliche Menge Trialkylaluminium zu. Insbesondere bevorzugt ist die Zugabe von etwa 5 % mehr als der stöchiometrischen Menge entspricht.

Nach erfolgter Zugabe des Trialkylaluminiums wird nun im Verfahrensschritt c) die Reaktionstemperatur leicht gesteigert und das Reaktionsgemisch unter Rückfluß etwa 1 bis 2 Stunden erhitzt. Das bei der Reaktion entstehende wasserfreie Aluminiumtriacetat ist in Tetrahydrofuran praktisch unlöslich und fällt aus.

In der Verfahrensstufe d) wird das ausgefallene Aluminiumtriacetat abgetrennt. Die Abtrennung erfolgt vorzugsweise durch Filtration. Aus dem Filtrat wird das Tetrahydrofuran durch Destillation, vorzugsweise bei vermindertem Druck, entfernt. Man erhält dabei das gewünschte Tetraalkylzinn in reiner Form.

Das bei dem erfindungsgemäßen Verfahren anfallende wasserfreie Aluminiumtriacetat ist eine wertvolle Verbindung, die in dieser Form ein hervorragender Katalysator für Veresterungs-, Umesterungs- und Kondensations-, insbesondere Polykondensationsreaktionen ist.

Das erfindungsgemäße Verfahren soll durch die folgenden Beispiele noch näher erläutert werden.

### Beispiel 1

In einem 250-ml-Vierhalskolben mit Rührer, Tropftrichter, Kühler mit Argonzufuhr und Thermometer werden 71 g Zinntetraacetat und 106,5 g Tetrahydrofuran vorgelegt. Unter Rühren und Durchleiten von Argon durch die Reaktionsapparatur werden langsam 102,7 g Trioctylaluminium zu der Aufschlämmung von Zinntetraacetat in Tetrahydrofuran zugetropft (Eintropfzeit: 1 Stunde und 40 Minuten).

Hierbei wird das Reaktionsgemisch so gekühlt, daß die Temperatur < 65°C beträgt. Nach Zugabe der gesamten Trioctylaluminiummenge wird die Reaktionsmischung 1 bis 2 Stunden auf Rückflußtemperatur von Tetrahydrofuran unter Rühren erwärmt. Danach wird das ausgefallene Aluminiumtriacetat über eine evakuierbare Filterfritte abfiltriert und dreimal mit je ca. 100 ml Tetrahydrofuran gewaschen und im Vakuum (ca. 1 mm Hg) bei Raumtemperatur getrocknet (Ausbeute: 55,2 g Aluminiumtriacetat).

Das Filtrat sowie die zum Waschen von Aluminiumtriacetat benutzte Tetrahydrofuranmenge werden vereinigt und dann Tetrahydrofuran im Wasserstrahlvakuum (ca. 15 mm Hg) abdestilliert. Es werden 105,9 g klares, farbloses Tetraoctylzinn erhalten.

### Beispiel 2

Analog der in Beispiel 1 erwähnten Arbeitsweise werden 71 g Zinntetraacetat in 106,5 g Tetrahydrofuran mit 55,5 g Tributylaluminium umgesetzt und aufgearbeitet.

Es werden 53,7 g Aluminiumtriacetat und 65,1 g Tetrabutylzinn erhalten, wobei sich die an Tetrabutylzinn erzielte Ausbeute auf die nach einer Vakuumdestillation (ca. 1 mm Hg) erhaltene Produktmenge bezieht.

## Patentansprüche

1. Verfahren zur Herstellung von Tetraalkylzinn, dessen Alkylreste jeweils 1 bis 18 Kohlenstoffatome aufweisen, gekennzeichnet durch folgende Verfahrensschritte:
a) Dispergieren von Zinntetraacetat in Tetrahydrofuran,
b) langsame Zugabe der zum vollständigen Umsatz benötigten, mindestens stöchiometrischen Menge Trialkylaluminium, dessen Alkylreste jeweils 1 bis 18 Kohlenstoffatome aufweisen,
b1) unter Einstellung einer Temperatur im Reaktionsgemisch von < 80°C,
c) Erhitzen des Reaktionsgemisches auf Rückflußtemperatur des Tetrahydrofurans während eines Zeitraumes von etwa 1 bis 2 Stunden bis zum vollständigen Umsatz,
d) Abtrennen des gebildeten Aluminiumtriacetates und Abdestillieren des Tetrahydrofurans.

2. Verfahren nach Anspruch 1, dadurch gekennzeichnet, daß man in Stufe b) bis zu etwa 10 % mehr als die stöchiometrisch erforderliche Menge Trialkylaluminium zugibt.

## Claims

1. Process for preparing tetraalkyltin, the alkyl radicals of which each have from 1 to 18 carbon atoms, characterized by the following process steps:
a) dispersing tin tetraacetate in tetrahydrofuran,
b) slowly adding the amount required for complete reaction, at least the stoichiometric amount, of trialkylaluminium, the alkyl radicals of which each have from 1 to 18 carbon atoms,
b1) with the setting of a temperature of < 80°C in the reaction mixture,
c) heating the reaction mixture to the reflux temperature of tetrahydrofuran for a time period of from about 1 to 2 hours until reaction is complete,
d) separating off the aluminium triacetate formed and distilling off the tetrahydrofuran.

2. Process according to Claim 1, characterized in that in stage b) up to about 10 % more than the stoichiometrically required amount of trialkylaluminium is added.

## Revendications

1. Procédé de préparation de tétra-alkylétain dont les restes alkyles comportent chacun de 1 à 18 atomes de carbone, caractérisé par les étapes de procédé suivantes :
a) dispersion de tétra-acétate d'étain dans du tétrahydrofuranne,
b) addition lente d'une quantité au moins stoechiométrique, nécessaire pour une conversion complète, de trialkylaluminium dont les restes alkyles comportent chacun de 1 à 18 atomes de carbone,
b1) avec ajustement de la température du mélange de réaction à < 80°C,
c) chauffage du mélange de réaction à la température de reflux du tétrahydrofuranne pendant un laps de temps d'environ 1 à 2 heures, jusqu'à ce que la réaction soit complète,
d) séparation du triacétate d'aluminium formé et élimination du tétrahydrofuranne par distillation.

2. Procédé selon la revendication 1, caractérisé en ce que, dans l'étape b), on ajoute une quantité de trialkylaluminium qui vaut jusqu'à environ 10 % plus que la quantité stoechiométrique nécessaire.
